# EUROPEAN PATENT APPLICATION

(11) **EP 4 768 305 A1**
(43) Date of publication of application: **01.07.2026**
(21) Application number: 25222566.9
(22) Date of filing: 11.12.2025
(51) Int. Cl.: B60L 3/00, B60L 3/04, B60L 53/10, B60L 58/18, B60L 58/19

(54) **VEHICLE CONNECTION CIRCUIT AND VEHICLE BATTERY STRUCTURE**

(30) Priority: 26.12.2024 JP 2024231126
(71) Applicant: Toyota Jidosha Kabushiki Kaisha, Toyota-shi, Aichi-ken 471-8571 (JP)
(72) Inventor: SHIMIZU, Yuki, Toyota-shi, 471-8571 (JP)
(74) Representative: TBK

(57) **Abstract**

A vehicle connection circuit provided at a vehicle, the vehicle connection circuit provided between a first battery and a second battery configured to be mutually connectable, and a motor, and electrically connect the first battery, the second battery, and the motor to each other, the vehicle connection circuit including: a first path for charging the first battery alone; a second path for charging the second battery alone; a third path for charging the first battery and the second battery; a first fuse provided on a path where the first path does not overlap with the second path nor the third path; a second fuse provided on a path where the second path does not overlap with the first path nor the third path; and a third fuse provided on a path where the first path, the second path, and the third path all overlap.

## Description

### BACKGROUND

### Technical Field

The present disclosure relates to a vehicle connection circuit and a vehicle battery structure.

### Related Art

A battery pack disclosed in Japanese Patent Application Laid-Open (JP-A) No. 2022-187311, is able to disconnect a large current using a fuse, even in cases in which short-circuit has occurred during a vehicle collision.

However, sometimes a vehicle connection circuit (hereinafter sometimes also referred to as a "junction block") connectable to plural batteries is provided in a vehicle equipped with plural batteries. In a case in which a junction block includes a path to flow current of a one battery and a path to flow current of two batteries, plural short-circuit modes arises. Accordingly, there is a desire to use a minimum number of required fuses to address various short-circuit modes from the perspectives of reducing cost and simplifying structure.

### SUMMARY

The present disclosure provides a vehicle connection circuit and a vehicle battery structure that may address plural short-circuit modes with a minimum number of required fuses in a vehicle equipped with plural batteries.

A first aspect of the present disclosure is a vehicle connection circuit provided at a vehicle, the vehicle connection circuit provided between a first battery and a second battery configured to be mutually connectable, and a motor, and electrically connect the first battery, the second battery, and the motor to each other, the vehicle connection circuit including: a first path for charging the first battery alone; a second path for charging the second battery alone; a third path for charging the first battery and the second battery; a first fuse provided on a path where the first path does not overlap with the second path nor the third path; a second fuse provided on a path where the second path does not overlap with the first path nor the third path; and a third fuse provided on a path where the first path, the second path, and the third path all overlap.

In the vehicle connection circuit according to the first aspect of the present disclosure, each of plural short-circuit modes may be addressed with a minimum number of required fuses in a vehicle equipped with plural batteries. Note that, "minimum required" means that the required number of fuses is minimum, and, for example, in a case in which there are three short-circuit modes for two batteries, each of three short-circuit modes may be addressed with three fuses. This thereby enables a reduction in cost and simplification in structure.

In a second aspect of the present disclosure, in the first aspect, the first fuse may be provided shifted toward a branch point of the first path and the third path.

In a vehicle connection circuit according to a second aspect of the present disclosure, a circuit may be disconnected further at an upstream side, in a case in which a short-circuit has occurred in the first path.

In a third aspect of the present disclosure, in the first aspect, the second fuse may be provided shifted toward a merge point of the second path and the third path.

In the vehicle connection circuit according to the third aspect of the present disclosure, a circuit may be disconnected further at an upstream side, in a case in which a short-circuit has occurred in the second path.

In a fourth aspect of the present disclosure, in the first aspect, the third fuse may be provided shifted toward a merge point of the first path, the second path, and the third path.

In the vehicle connection circuit according to the fourth aspect of the present disclosure, a circuit may be disconnected further at an upstream side, in a case in which a short-circuit has occurred in the third path.

A fifth aspect of the present disclosure is a vehicle battery structure including a vehicle battery structure including: a first battery; a second battery configured connectable to the first battery; and the vehicle connection circuit of any one of the first aspect to the fourth aspect, the vehicle connection circuit provided between the first battery and the second battery, and a motor, so as to electrically connect the first battery, the second battery, and the motor.

In the vehicle battery structure according to the fifth aspect of the present disclosure, each of the plural short-circuit modes may be addressed with a minimum number of required fuses in a vehicle equipped with plural batteries.

According to the above aspects, the vehicle connection circuit and the vehicle battery structure of the present disclosure may address plural short-circuit modes with a minimum number of required fuses in a vehicle equipped with plural batteries.

### BRIEF DESCRIPTION OF THE DRAWINGS

Exemplary embodiments will be described in detail based on the following figures, wherein:
Fig. 1 is a block diagram illustrating a configuration of a vehicle battery structure installed in a vehicle according to an exemplary embodiment;
Fig. 2 is a diagram illustrating a circuit configuration of a vehicle battery structure according to an exemplary embodiment;
Fig. 3 is a diagram illustrating a circuit configuration of a vehicle battery structure according to an exemplary embodiment;
Fig. 4 is a diagram illustrating a circuit configuration of a vehicle battery structure according to an exemplary embodiment; and
Fig. 5 is a diagram illustrating a circuit configuration of a vehicle battery structure according to a comparative example.

### DETAILED DESCRIPTION

Detailed description follows regarding an example of an exemplary embodiment of technology disclosed herein, with reference to the drawings.

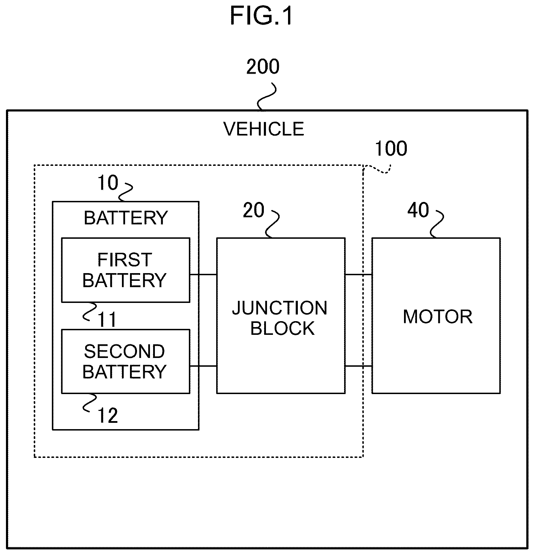

Fig. 1 is a block diagram illustrating an example of a configuration of a vehicle battery structure 100 installed in a vehicle 200 according to an exemplary embodiment. As illustrated in Fig. 1, the vehicle battery structure 100 and a motor 40 for driving the vehicle 200 are installed in the vehicle 200 according to the present exemplary embodiment. The vehicle battery structure 100 includes a battery 10 and a junction block 20. The battery 10 includes a first battery 11 and a second battery 12. The first battery 11 and the second battery 12 are configured to be connectable to each other. The junction block 20 is an example of a vehicle connection circuit. The junction block 20 is provided between the motor 40 and both the first battery 11 and the second battery 12, and electrically connects the first battery 11, the second battery 12, and the motor 40 to each other.

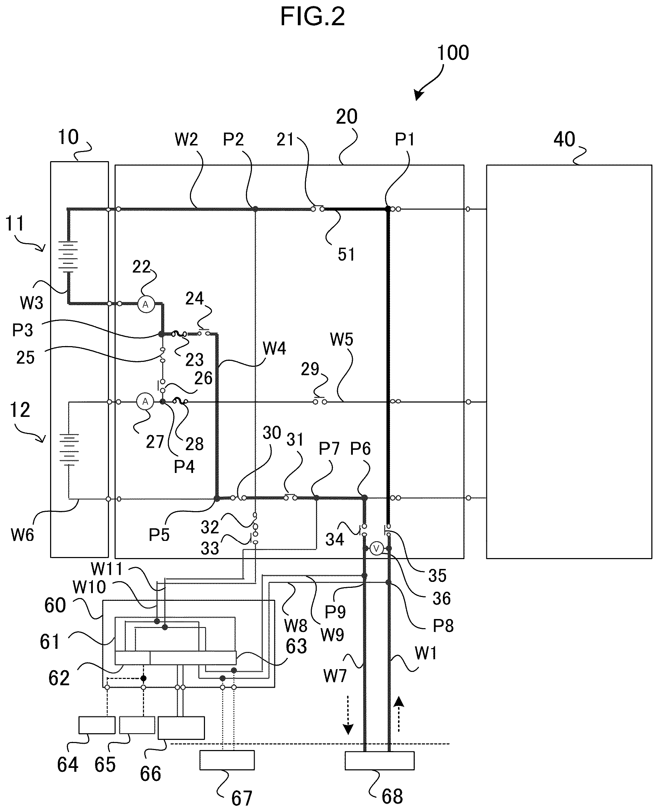

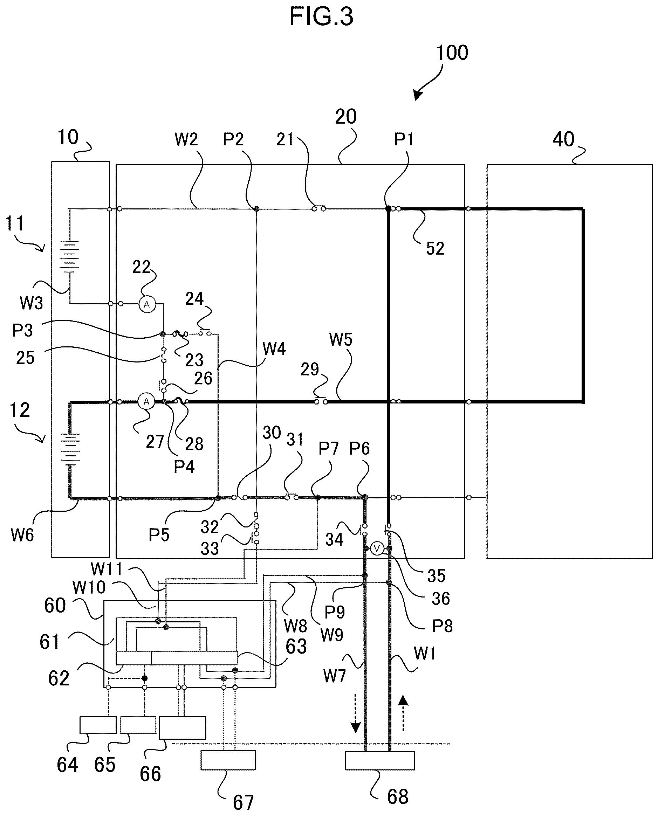

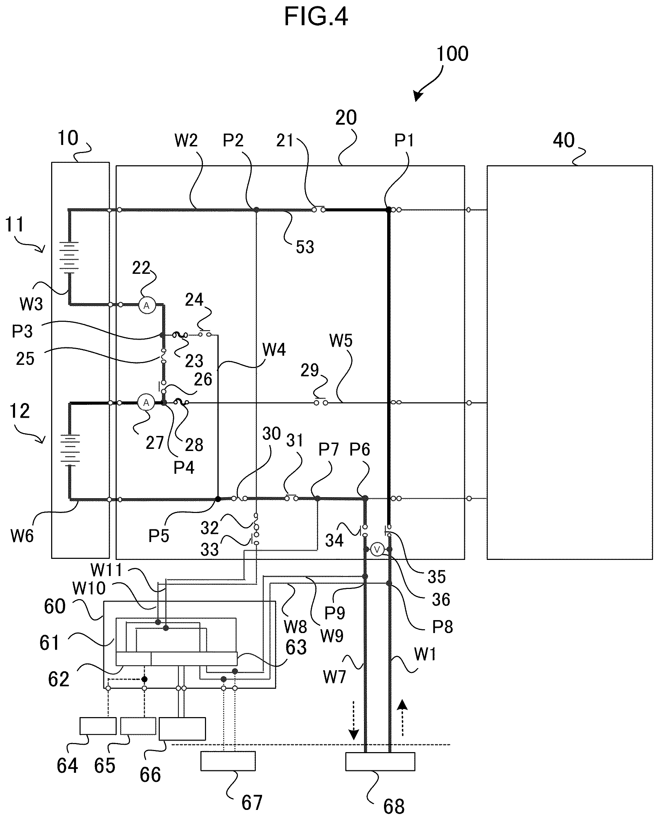

Fig. 2 to Fig. 4 are diagrams illustrating examples of circuit configurations of the vehicle battery structure 100 according to the present exemplary embodiment. The circuit configurations of Fig. 2 to Fig. 4 are similar to each other. Fig. 2 illustrates a first path 51 (bold line), Fig. 3 illustrates a second path 52 (bold line), and Fig. 4 illustrates a third path 53 (bold line). Note that, dotted line arrows in Fig. 2 to Fig. 4 indicate directions of current flow.

As illustrated in Fig. 2 to Fig. 4, in a case in which a DC inlet 68 is employed for rapid charging, the junction block 20 is connected to the DC inlet 68, in order to rapidly charge the first battery 11 and the second battery 12. However, in a case in which a 2-in-1 charger 60 is employed for normal charging, the junction block 20 is connected to a solar battery panel 64 and an auxiliary battery 65, in order to normally charge the first battery 11 and the second battery 12 through the 2-in-1 charger 60. Moreover, the junction block 20 may be configured to be connected through the 2-in-1 charger 60 to a distribution wiring outlet connector (a so-called AC100V outlet) 66 or to an AC inlet 67, for charging the first battery 11 and the second battery 12. The 2-in-1 charger 60 includes a filter 61, a DC-DC converter 62, and an On-Board Charger (OBC) 63. The DC-DC converter 62 is connected to the solar battery panel 64 and the auxiliary battery 65, and converts a DC voltage supplied from the solar battery panel 64 and the auxiliary battery 65 to a specific DC voltage compatible with the first battery 11 and the second battery 12. The OBC 63 is connected to either the distribution wiring outlet connector 66 or the AC inlet 67, and converts an AC voltage supplied from the distribution wiring outlet connector 66 or the AC inlet 67 into a specific DC voltage compatible with the first battery 11 and the second battery 12. The DC-DC converter 62 and the OBC 63 are both connected to the junction block 20.

The junction block 20 includes, a plus-side system main relay 21, a first current sensor 22, a first fuse 23, a first DC relay 24, a DC fuse 25, a second DC relay 26, a second current sensor 27, a second fuse 28, a third DC relay 29, a third fuse 30, a minus side system main relay 31, an AC fuse 32, a plus-side system sub relay 33, a fourth DC relay 34, a fifth DC relay 35, and a voltage sensor 36.

A one end of a wire W1 is connected to a plus-side of the DC inlet 68, and the other end thereof is connected to a wire W2 by a contact point P1. A one end of a wire W2 is connected to the motor 40, and the other end thereof is connected to a plus-side of the first battery 11. A one end of a wire W3 is connected to a minus-side of the first battery 11, and the other end thereof is connected to a wire W5 by a contact point P4. A one end of a wire W4 is connected to the wire W3 by a contact point P3, and the other end thereof is connected to a wire W6 by a contact point P5. A one end of a wire W5 is connected to the motor 40, and the other end thereof is connected to a plus-side of the second battery 12. A one end of a wire W6 is connected to a minus-side of the second battery 12, and the other end thereof is connected to the motor 40. A one end of a wire W7 is connected to a minus-side of the DC inlet 68, and the other end thereof is connected to the wire W6 by a contact point P6. A one end of a wire W8 is connected to a plus-side of the OBC 63, and the other end thereof is connected to the wire W1 by a contact point P8. A one end of a wire W9 is connected to a minus-side of the OBC 63, and the other end thereof is connected to the wire W7 by a contact point P9. A one end of a wire W10 is connected to a plus-side of the DC-DC converter 62 and the plus-side of the OBC 63, and the other end thereof is connected to the wire W2 by a contact point P2. A one end of a wire W11 is connected to a minus-side of the DC-DC converter 62 and a minus-side of the OBC 63, and the other end thereof is connected to the wire W6 by a contact point P7.

The junction block 20 according to the present exemplary embodiment includes a first path 51 (indicated by the bold line in Fig. 2), a second path 52 (indicated by the bold line in Fig. 3), and a third path 53 (indicated by the bold line in Fig. 4). The first path 51 is a path for charging only the first battery 11 from the DC inlet 68, and is a path through wires W1, W2, W3, W4, W6, W7. The second path 52 is a path for charging only the second battery 12 from the DC inlet 68, and is a path through wires W1, W2, the motor 40, wires W5, W6, W7. The third path 53 is a path for charging both the first battery 11 and the second battery 12 from the DC inlet 68, and is a path through wires W1, W2, W3, W5, W6, W7.

The plus-side system main relay 21 is provided between the contact point P1 of the wire W1, and the contact point P2 of the wire W2, and switches between the first path 51 and the second path 52. The first current sensor 22 is provided between the minus-side of the first battery 11 and the contact point P3 of the wire W3, and measures current flowing in the first path 51 or the third path 53. The first fuse 23 is provided between the contact point P3 of the wire W4 and the first DC relay 24. The first DC relay 24 is provided between the first fuse 23 and the contact point P5 of the wire W4, and switches between the first path 51 and the third path 53. The DC fuse 25 is provided between the contact point P3 of the wire W3 and the second DC relay 26. The second DC relay 26 is provided between the DC fuse 25 of the wire W3 and the contact point P4, and switches between the first path 51 and the third path 53. The second current sensor 27 is provided between the contact point P4 of the wire W5 and the plus-side of the second battery 12, and measures current flowing in the second path 52 or the third path 53. The second fuse 28 is provided between the contact point P4 of the wire W5 and the third DC relay 29. The third DC relay 29 is provided between the second fuse 28 of the wire W5 and the motor 40, and switches between the first path 51 and the second path 52. The third fuse 30 is provided between the contact point P5 of the wire W6 and the minus side system main relay 31. The minus side system main relay 31 is provided between the third fuse 30 and the contact point P7 of the wire W6, and switches ON/OFF the first path 51, the second path 52, and the third path 53. The AC fuse 32 is provided between the plus-side system sub relay 33 and the contact point P2 of the wire W10. The plus-side system sub relay 33 is provided between the AC fuse 32 of the wire W10 and the plus-side of the DC-DC converter 62 and the OBC 63, and switches between connection/disconnection of the 2-in-1 charger 60. The fourth DC relay 34 is provided between the contact point P9 and the contact point P6 of the wire W7, and switches between connection/disconnection of the DC inlet 68. The fifth DC relay 35 is provided between the contact point P1 and the contact point P8 of the wire W1, and switches between connection/disconnection of the DC inlet 68. The voltage sensor 36 is provided between the wire W1 and the wire W7, and measures a voltage between the wire W1 and the wire W7.

In the present exemplary embodiment, the first path 51 includes the first fuse 23 provided on a path not overlapping with the second path 52 and the third path 53. Namely, the first fuse 23 may be provided between the contact point P3 and the contact point P5. The contact point P3 is a branch point of the first path 51 and the third path 53. The first fuse 23 is preferably provided between the contact point P3 and the contact point P5 shifted toward the contact point P3, in other words provided at the vicinity of the contact point P3. Namely, in a case in which the first fuse 23 is provided closer to the first battery 11, the first fuse 23 may disconnect the circuit at an upstream side.

The second path 52 includes the second fuse 28 provided on a path not overlapping with the first path 51 nor the third path 53. Namely, the second fuse 28 may be provided between the contact point P4 and the motor 40. The contact point P4 is a merge point of the second path 52 and the third path 53. The second fuse 28 is preferably provided between the contact point P4 and the motor 40 shifted toward the contact point P4, in other words at the vicinity of the contact point P4. Namely, in a case in which the second fuse 28 is provided closer to the second battery 12, the second fuse 28 may disconnect the circuit at an upstream side.

The third fuse 30 is provided on a path where the first path 51, the second path 52, and the third path 53 all overlap. Namely, the third fuse 30 may be provided between the contact point P5 and the contact point P6. The contact point P5 is a merge point of the first path 51, the second path 52, and the third path 53. The third fuse 30 is preferably provided between the contact point P5 and contact point P6 shifted toward the contact point P5, in other words at the vicinity of the contact point P5. Namely, in a case in which the third fuse 30 is disposed closer to the second battery 12, the third fuse 30 may disconnect the circuit at an upstream side.

Various short-circuit modes may be addressed with three fuses by arranging the first fuse 23, the second fuse 28, and the third fuse 30, as described above. For example, the DC inlet 68 is 400V, the first fuse 23 is 400A, and the second fuse 28 is 400A. In such cases, 400V charging of the first battery 11 or 400V charging of the second battery 12 is possible. In a case in which a short-circuit has occurred due to a malfunction or the like during charging of the first battery 11, the circuit is disconnected by cutting the first fuse 23 on the first path 51. Similarly, in a case in which a short has occurred due to a malfunction or the like during charging of the second battery 12, the circuit is disconnected by cutting the second fuse 28 on the second path 52. Moreover, for example, the DC inlet 68 may be 800V, and the third fuse 30 may be 700A. In such cases, 800V charging of the first battery 11 and the second battery 12 is possible. In a case in which a short-circuit has occurred due to a malfunction or the like during charging of the first battery 11 and the second battery 12, the circuit is disconnected by cutting the third fuse 30 on the third path 53. Note that, 800V charging of the first battery 11 and the second battery 12 is also possible when the vehicle 200 is traveling. In a case in which a short-circuit has occurred due to a malfunction or the like during charging of the first battery 11 and the second battery 12, when the vehicle 200 is traveling, the circuit is disconnected by cutting the third fuse 30 on the third path 53.

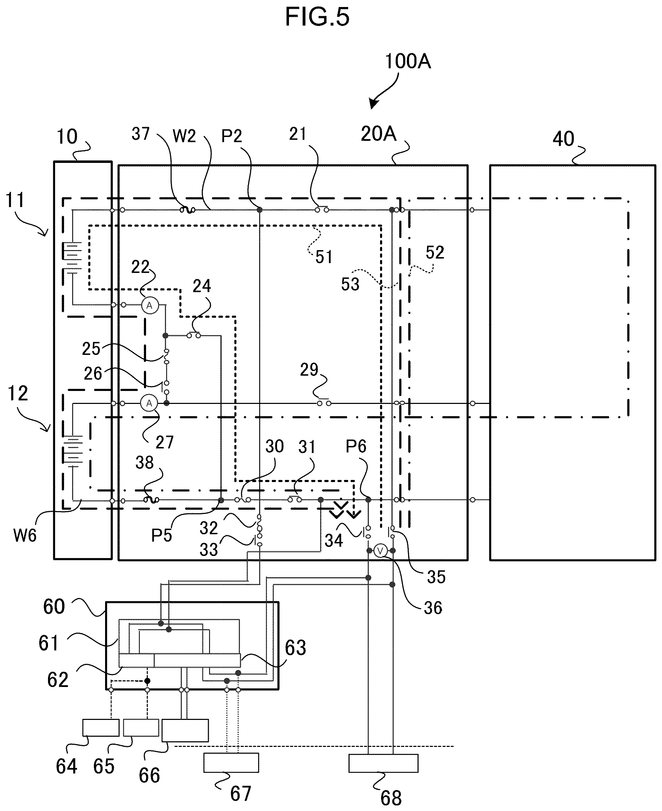

Fig. 5 is a diagram illustrating a circuit configuration of a vehicle battery structure 100A according to a comparative example. In Fig. 5, a first path 51 is indicated by a fine dotted line, a second path 52 is indicated by a single dot broken line, and a third path 53 is indicated by a course dashed line. As illustrated in Fig. 5, the vehicle battery structure 100A according to the comparative example includes a junction block 20A. The junction block 20A includes a fourth fuse 37 (for example, 700A) and a fifth fuse 38 (for example, 700A) instead of the first fuse 23 and the second fuse 28.

The fourth fuse 37 is provided between the contact point P2 of the wire W2 and the plus-side of the first battery 11. The fifth fuse 38 is provided on the wire W6 between the contact point P5 and the minus-side of the second battery 12. Moreover, the third fuse 30 is provided between the contact point P5 and the contact point P6 of the wire W6. In this case the fourth fuse 37 is common to both the first path 51 and the third path 53, and so each of these paths is unable to be addressed separately during short-circuit. Namely, both the first path 51 and the third path 53 are no longer usable in a case in which the fourth fuse 37 has been cut. Moreover, the amperage (capacity) of the fourth fuse 37 needs to be large (for example, 700A) in order to accommodate the third path 53. Similarly, the fifth fuse 38 is common to both the second path 52 and the third path 53, and so each of these paths is unable to be addressed separately during short-circuit. Namely, both the second path 52 and the third path 53 are no longer usable in a case in which the fifth fuse 38 has been cut. Moreover, the amperage (capacity) of the fifth fuse 38 needs to be large (for example, 700A) in order to accommodate the third path 53.

In contrast thereto, in the junction block 20 according to the present exemplary embodiment, due to arranging each of the first fuse 23, the second fuse 28, and the third fuse 30 respectively on the first path 51, the second path 52, and the third path 53, each of these paths can be addressed separately during short-circuit. Namely, the second path 52 and the third path 53 are still usable even if the first fuse 23 has been cut. Moreover, due to the first fuse 23 not being common to the third path 53, the amperage (capacity) of the first fuse 23 can be small (for example, 400A). Similarly, the first path 51 and the third path 53 are still usable even if the second fuse 28 has been cut. Moreover, due to the second fuse 28 not being common to the third path 53, the amperage (capacity) of the second fuse 28 may be made small (for example, 400A).

The present exemplary embodiment accordingly enables plural short-circuit modes to be addressed with a minimum number of required fuses, in a vehicle equipped with plural batteries.

The technical scope of the present disclosure is not limited by the range described in the above exemplary embodiment. Various other modifications and improvements may be implemented to the above exemplary embodiment within a scope not departing from the spirit thereof, and embodiments resulting from such modifications and improvements are contained in the technical scope of the present disclosure.

## Claims

1. A vehicle connection circuit (20) provided at a vehicle (200), the vehicle connection circuit (20) provided between a first battery (11) and a second battery (12) configured to be mutually connectable, and a motor (40), and electrically connect the first battery (11), the second battery (12), and the motor (40) to each other, the vehicle connection circuit (20) comprising:
a first path (51) for charging the first battery (11) alone;
a second path (52) for charging the second battery (12) alone;
a third path (53) for charging the first battery (11) and the second battery (12);
a first fuse (23) provided on a path where the first path (51) does not overlap with the second path (52) nor the third path (53);
a second fuse (28) provided on a path where the second path (52) does not overlap with the first path (51) nor the third path (53); and
a third fuse (30) provided on a path where the first path (51), the second path (52), and the third path (53) all overlap.

2. The vehicle connection circuit (20) according to claim 1, wherein the first fuse (23) is provided shifted toward a branch point of the first path (51) and the third path (53).

3. The vehicle connection circuit (20) of claim 1, wherein the second fuse (23) is provided shifted toward a merge point of the second path (52) and the third path (53).

4. The vehicle connection circuit (20) of claim 1, wherein the third fuse (30) is provided shifted toward a merge point of the first path (51), the second path (52), and the third path (53).

5. A vehicle battery structure (100) comprising:
a first battery (11);
a second battery (12) configured connectable to the first battery (11); and
the vehicle connection circuit (20) of any one of claim 1 to claim 4, the vehicle connection circuit (20) provided between the first battery (11) and the second battery (12), and a motor (40), so as to electrically connect the first battery (11), the second battery (12), and the motor (40).
